# EUROPEAN PATENT SPECIFICATION

(11) **EP 1 122 899 B1**
(45) Date of publication and mention of the grant of the patent: **02.07.2003**
(21) Application number: 01300637.4
(22) Date of filing: 24.01.2001
(51) Int. Cl.: H04B 10/18

(54) **Optical dipersion compensation**
Optische Dispersionskompensation
Compensation de la dispersion optique

(30) Priority: 01.02.2000 GB 0002286
(43) Date of publication of application: 08.08.2001
(73) Proprietor: ALCATEL, 75008 Paris (FR)
(72) Inventor: Hazell, Neville John, West Wickham, Kent BR4 ODX (GB); Wall, David, Beckenham, Kent BR3 4NX (GB); Terribili, Peter, Acton, London W3 8JN (GB); Gautheron, Olivier, 78180 Montigny-le-Brettonneux (FR); Chesnoy, José, 75014 Paris (FR); Bourret, Gerard, 91620 La Ville du bois (FR)
(74) Representative: Lamoureux, Bernard

(56) References cited:
- EP-A- 0 657 754
- EP-A- 0 684 709
- EP-A- 0 732 819
- EP-A- 0 795 973
- US-A- 5 793 917
- US-A- 5 956 440

## Description

The present invention relates to dispersion compensation for optical signals. In particular, it relates to dispersion compensation for wavelength division multiplexed (WDM) optical signals.

Optical fibre networks are becoming increasingly important in telecommunications, as they offer favourable bandwidths compared with many other systems. Better utilisation of available bandwidths promises higher data rates and more economical telecommunications.

WDM optical transmission systems allow efficient use of the available bandwidth of an optical fibre by dividing it into a number of independent channels at different wavelengths.

Dispersion of the component wavelengths of WDM signals is an important consideration in the performance of optical fibre systems, affecting either available data rates or distances between optical repeaters. The present limit of 32 channels at 10 Gbits⁻¹ over 4000km comes from this limitation.

Dispersion compensation involves applying dispersion or wavelength dependent delays to the optical signals in reverse order to that occurring in the optical fibre over a long haul. A conventional approach to dispersion compensation of WDM signals is bulk dispersion compensation in which the entire WDM signal is passed in common through a dispersion compensating element. A limitation of this approach arises from the fact that it is difficult to provide dispersion compensation elements having both suitable dispersion and attenuation characteristics over a sufficiently large bandwidth to compensate adequately all of the channels. Some channels will experience unfavourable dispersion or attenuation characteristics, or both. Another approach to dispersion compensation, aimed at overcoming these drawbacks, involves applying dispersion compensation on a channel-by-channel basis. This allows better system optimisation as it is easier to provide dispersion compensation elements with suitable dispersion and optical attenuation characteristics over the relatively narrow bandwidths of individual channels. This approach provides good system performance but significantly adds to the complexity of a system. For example, the WDM signal must be demultiplexed and remultiplexed either side of the dispersion compensation elements. In submarine optical repeaters there is little room for this at present and with the advent of systems operating with 60 or more channels this approach does not offer an acceptable solution.

A dispersion compensation arrangement for use in an optical communication system is known from EP 0 684 709 A1 wherein *,inter alia,* dispersion compensation to a plurality of channels is discussed. This document teaches that the plurality of channels are divided into individual channels each of which being then directed through individual paths. In each path there is provided a dispersion compensation unit. Therefore, each of said units compensates for the wavelength that it receives. It is noted however that the mentioned document has no reference to carrying a plurality of channels, forming a wavelength band, for dispersion compensation through an individual path.

Similar arrangements are also known from EP 0 657 754 A1 and US 5 956 440.

### Summary of the invention

According to a first aspect of the present invention, a method of dispersion compensation comprises the steps of:
receiving an optical signal having a number of channels separated by wavelength; and applying dispersion compensation over at least one predetermined wavelength band independently of wavelengths outside the wavelength band,
wherein the wavelength band spans a plurality of channels numbering less than the total number of channels in the signal.

The present invention allows dispersion compensation to be applied to a group of channels within a wavelength band with the use of a dispersion compensation element optimised for the particular wavelength band in terms of dispersion compensation and attenuation. Two or more wavelength bands may be chosen to collectively span a WDM signal. Accordingly, the dispersion compensation characteristics of a number dispersion compensation elements may be collocated to create a favourable dispersion compensation characteristic extending over the bandwidth of a WDM signal, without the need to treat each channel individually. A mid-span single device permits 40 channels at 10 Gbits⁻¹ over two bands over a distance of at least 6000 km. The simple configuration allows for rapid implementation.

The method may include splitting the plurality of channels into two or more wavelength bands, propagating these bands along separate optical paths, wherein dispersion compensation is applied in at least one of the optical paths, and subsequently re-combining the signals at an optical output. Preferably, the signal carried by at least one of the optical paths is amplified to compensate for losses.

Preferably, dispersion compensation is provided by means of a number of lengths of dispersion compensation optical fibre.

As an alternative, the method may include passing the entire optical signal through a band-selective dispersion compensation element adapted to apply dispersion compensation only to channels within a predetermined wavelength band.

Preferably, channels outside the predetermined wavelength band are reflected by a separate optical element.

Preferably, the dispersion compensating element is a photorefractive element or a diffraction grating.

The method may also include imposing a uniform delay to a particular wavelength band to compensate for relative dispersion between two bands.

According to a second aspect of the present invention, a dispersion compensation device for applying dispersion compensation to an optical signal having a number of channels, comprises a dispersion compensation element which is configured to apply dispersion compensation only to a predetermined wavelength band independently of wavelengths outside the wavelength band, the predetermined wavelength band spanning a plurality of channels numbering less than the total number of channels of the optical signal.

In one arrangement, the dispersion compensation device comprises a band splitter which feeds two or more optical paths, wherein at least one of the optical paths comprises a dispersion compensation element.

Preferably, the dispersion compensation element comprises a length of dispersion compensating optical fibre.

In an alternative arrangement, the dispersion compensation device comprises an optical coupler which feeds an optical signal received at an optical input to an optical path having a dispersion compensation element, the dispersion compensation element being adapted to apply dispersion compensation to a number of channels within a limited bandwidth and reflect signals within that bandwidth to an optical output of the optical coupler.

Preferably, the optical coupler is an optical circulator.

Preferably, the dispersion compensation element is a diffraction grating or a photorefractive element.

Preferably, the dispersion compensation device further comprises an optical reflector coupled to the dispersion compensating element to reflect optical signals outside of the predetermined bandwidth.

Preferably, a delay element is provided to compensate for relative delay between bands. More preferably, the delay element is a length of optical fibre coupled between the dispersion compensation element and the optical reflector.

According to a third -aspect of the -present invention, a dispersion compensation device comprises a housing having at least one spool of dispersion compensation fibre arranged axially within the housing so as to provide a passage extending along a length of the housing through the core of the spool.

Preferably, the housing is a submarine housing. More preferably, the submarine housing is a casing for an optical repeater.

### Brief Description of the Drawings

Examples of the present invention will now be described in detail with reference to the accompanying drawings, in which:
Figure 1 shows an example of a dispersion compensation device according to the present invention;
Figure 2 shows the dispersion compensation applied by the device of Figure 2;
Figures 3 and 4 show an arrangement for stowing a dispersion compensation device in a submarine optical repeater;
Figure 5 shows another example of a dispersion compensation device according to the present invention;
Figure 6 shows a two layer cascade of the dispersion compensation devices shown in Figure 5;
Figure 7 shows the dispersion compensation applied by the device of Figure 6; and,
Figure 8 shows the use of the dispersion compensation device of the present invention midstream in an optical transmission line.

### Detailed Description

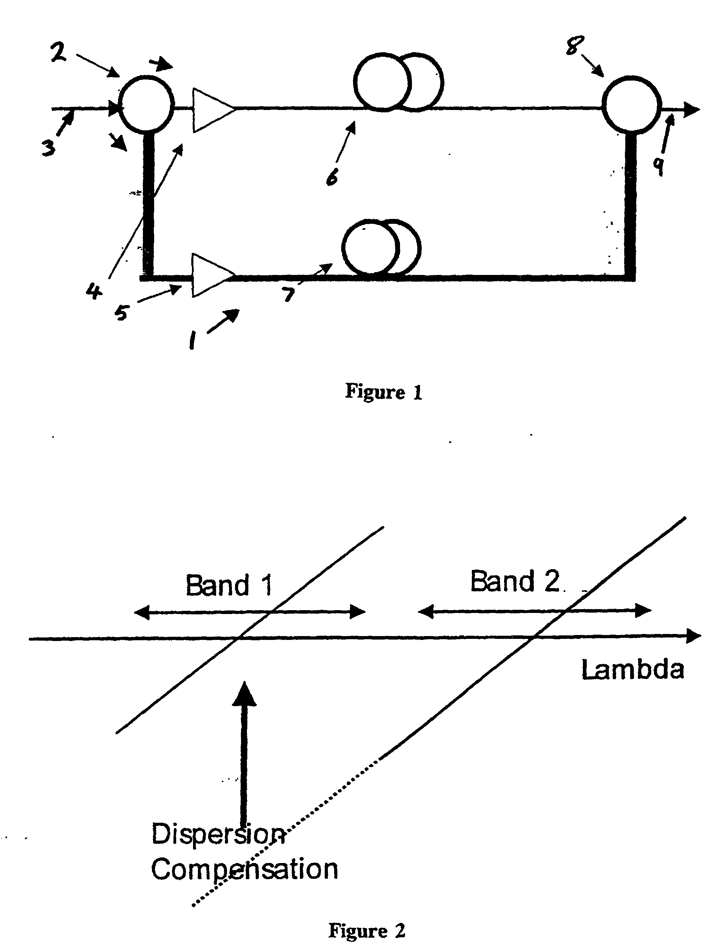

Figure 1 shows an example of a dispersion compensation device 1 in accordance with the present invention. In this device, an interferometric band splitter 2 having an optical input 3 feeds two propagation paths each having an optical amplifier 4 and 5 and dispersion compensation element 6 and 7, respectively. A band combiner 8 having an optical output 9 is connected to the outputs of each of the propagation paths. In this example, the dispersion compensation elements 6 and 7 are both lengths of dispersion compensating fibre.

In this arrangement, a WDM signal received at the optical input 3 of the interferometric band splitter 2 is divided into two signals, each defining a different wavelength band encompassing a number of channels. Each band then passes through a respective dispersion compensation element 6 or 7 and optical amplifier 4 or 5 before being re-combined with the other band at the band combiner 8.

Each dispersion compensation element 6 and 7 is optimised for a particular wavelength band in terms of both the slope of the dispersion compensation characteristic and the optical attenuation characteristic to account for the accumulation of dispersion due to optical fibre slope in WDM optical long haul transmission. The gain of each optical amplifier 4 and 5 may be selected to compensate for the specific attenuation caused by the dispersion compensation element 6 or 7 and/or wavelength dependent attenuation occurring in long haul transmission.

Figure 2 shows an example of the relationship between wavelength and dispersion compensation accumulation, illustrating the degree of dispersion compensation applied across the two bands by the respective dispersion compensation elements. The gap between the two bands results from the use of a band splitter and to allow for this the channels of a WDM signal may be clustered with gaps between the clusters.

The dispersion compensation slopes in Figure 2 show the dispersion compensation accumulation profiles of two different dispersion compensation elements. The dotted line extending from the second of these slopes is included to illustrate the dispersion compensation function that would be obtained by the use of a single dispersion compensation element used to treat the entire WDM signal. This arrangement would highly attenuate some of the channels of the WDM signal. In contrast, the relatively narrow bandwidths treated by the two bandwidth optimized dispersion compensation elements indicated in Figure 2 provide only low attenuation within each band which can be adequately compensated for by an optical amplifier.

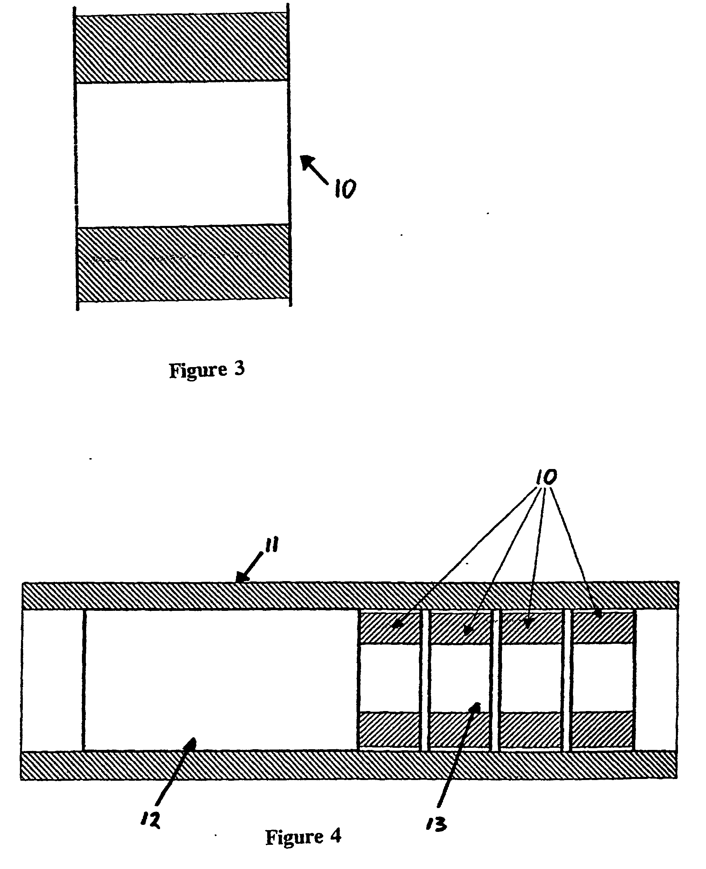

Figures 3 and 4 show how spools 10 of dispersion compensating fibre used for the dispersion compensation elements may be--fitted within the sea-casing 11 of a submarine optical repeater. The outside diameter of the spool 10 is selected to fit within the internal diameter of a standard sea-casing 11, typically around 200mm. The internal diameter of the spool is selected to match the minimum bend radius of the optical fibre, which is typically around 50mm. The height of each spool 10 varies according to the length of fibre used for the dispersion compensation element. Typically, 50km sections may be used, requiring a spool height of around 100mm. The spools 10 are arranged at one end of the casing to leave a space 12 at the other end for a number of opto-electronics trays which implement various other functions associated with optical repeaters. The bore of the spools 10 provides a passage 13 for other optical, electrical and mechanical elements.

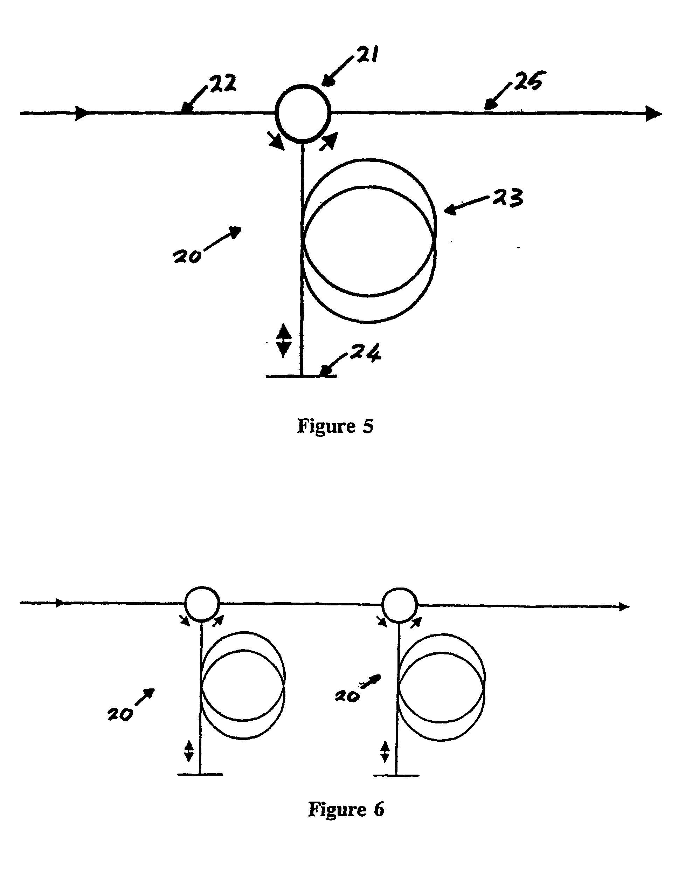

Figure 5 shows another example of a dispersion compensation device 20 according to the present invention. The device 20 consists of an optical circulator 21 connected to an optical input 22. An optical arm branches from one of the ports of the optical circulator to couple a WDM signal received at the optical input 22 to a band selective dispersion compensation element 23. In this example, the band selective dispersion compensation element 23 may be a photorefractive element or diffraction grating. Beyond the dispersion compensation element 23 at the end of a section of optical fibre is a mirror 24, forming a bulk reflector. The optical circulator 21 couples signals reflected by both the band selective dispersion compensation element 23 and the reflector 24 to an optical output 25.

In this arrangement, the entire WDM signal received at the optical input is coupled via the arm to the dispersion compensation element 23 which applies a wavelength dependent delay to in-band channels and reflects them to the optical output of the optical circulator 21. Out-of-band channels are coupled to the bulk reflector 24 and hence back to the same optical output. A bulk delay may be imposed on out-of-band channels by the additional propagation path length provided by the length of optical fibre. This delay may be chosen to provide inter-band dispersion compensation. It may also be minimised, to be negligible.

The effect of this dispersion compensation device 20 is to apply a dispersion compensation accumulation slope to channels of the WDM signal which lie within the predetermined band affected by the dispersion compensating element 23. Channels outside this band are unaffected, apart from a uniform delay imposed by the (optional) additional optical path to and from the bulk reflector.

Figure 6 shows a cascaded arrangement for applying dispersion compensation to two wavelength bands. This scheme consists of two of the band selective dispersion compensation devices 20 shown in Figure 5, in which each of the dispersion compensation elements 23 are selected to compensate different wavelength bands. Any number of the devices 20 can be cascaded to cover the entire bandwidth of a WDM signal to apply compensation to groups of channels. The length of the optical path in each case may be adjusted to provide an extra degree of freedom for relative dispersion compensation between bands. This is in addition to the dispersion compensation within the bands provided by the dispersion compensation elements 23.

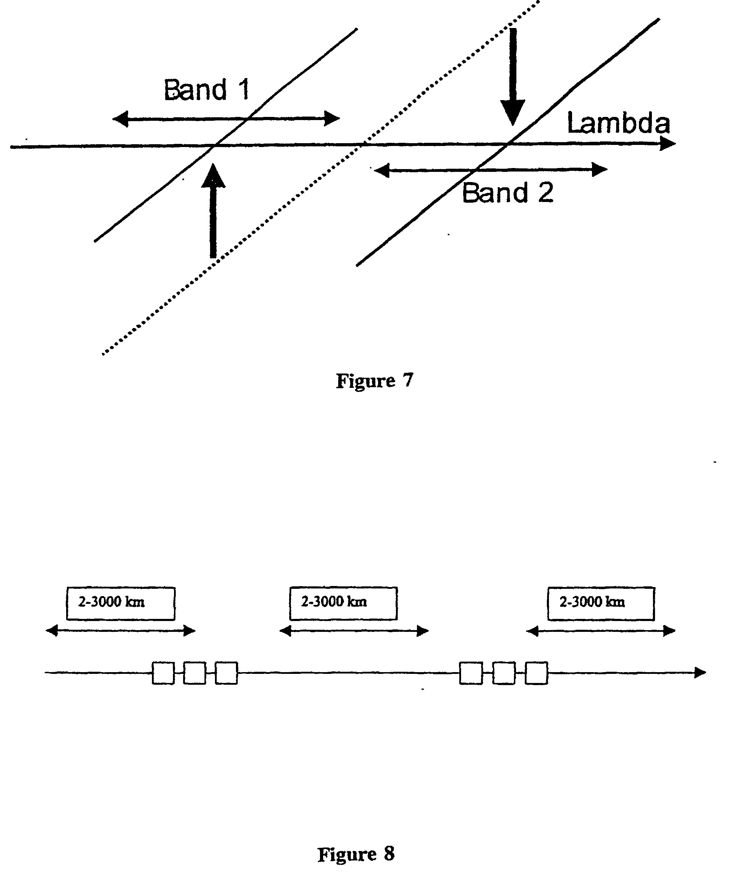

Figure 7 illustrates the effect of the two-layer cascade shown in Figure 6, where dispersion compensation has been applied to both bands. In this case band 1 has been relatively delayed and band 2 has been relatively advanced. Within each wavelength band, longer wavelengths have been relatively delayed.

Figure 8 shows an example of how the dispersion compensation devices of the present invention may be used in a submarine communications system. Dispersion compensation devices within optical repeaters are placed at regular intervals along the length of the submarine cable to process optical signals.

## Claims

1. A method of dispersion compensation comprising the steps of:
receiving an optical signal having a number of channels separated by wavelength; and, applying dispersion compensation to at least one optical path, **characterised in that** said path carries a wavelength band which spans a plurality of channels numbering less than the total number of channels in the optical signal, thereby applying dispersion compensation to said wavelength band independently of wavelengths outside said wavelength band.

2. A method according to claim 1, further comprising the steps of:
splitting the plurality of channels into two or more wavelength bands;
propagating the two or more wavelength bands along separate optical paths, wherein dispersion compensation is applied in at least one of the optical paths; and, subsequently re-combining the signals at an optical output.

3. A method according to claim 2, in which the signal carried by at least one of the optical paths is amplified to compensate for losses.

4. A method according to any preceding claim, in which dispersion compensation is provided by means of a number of lengths of dispersion compensating optical fibre.

5. A method according to claim 1, including the step of:
passing the entire optical signal through a band-selective dispersion compensation element adapted to apply dispersion compensation only to channels within a predetermined wavelength band.

6. A method according to claim 5, in which channels outside the predetermined wavelength band are reflected by an optical element which is different from said band-selective dispersion compensation element.

7. A method according to claim 5 or 6, in which the dispersion compensating element is a photorefractive element or a diffraction grating.

8. A method according to any preceding claim, further comprising the step of:
imposing a uniform delay to a particular wavelength band to compensate for relative dispersion between the particular wavelength band and a second different wavelength band.

9. A dispersion compensation device for applying dispersion compensation to an optical signal having a number of channels, comprising a dispersion compensation element (6; 7; 23) which is configured to apply dispersion compensation to at least one optical path, **characterised in that** said path carries a predetermined wavelength band spanning a plurality of channels numbering less than the total number of channels of the optical signal thereby applying dispersion compensation to the predetermined wavelength band independently of wavelengths outside the predetermined wavelength band.

10. A device according to claim 9, further comprising a band splitter arranged to feed two or more optical paths, wherein at least one of the optical paths comprises a dispersion compensation element.

11. A device according to claims 9 or 10, in which the dispersion compensation element comprises a length of dispersion compensating optical fibre.

12. A device according to any of claims 9 to 11, further comprising an optical coupler arranged to feed an optical signal received at an optical input to an optical path having a dispersion compensation element, the dispersion compensation element being adapted to apply dispersion compensation to a number of channels within a limited bandwidth and reflect signals within that bandwidth to an optical output of the optical coupler.

13. A device according to claim 12, in which the optical coupler is an optical circulator.

14. A device according to any of claims 9 to 13, in which the dispersion compensation element is a diffraction grating.

15. A device according to any one of claims 9 to 13, in which the dispersion compensation element is a photorefractive element.

16. A device according to any of claims 12 to 15, in which the dispersion compensation device further comprises an optical reflector coupled to the dispersion compensating element to reflect optical signals outside of the predetermined bandwidth to the optical output of the optical coupler.

17. A device according to any of claims 9 to 16, further comprising a delay element to provide inter-band dispersion compensation.

18. A device according to claim 16 or claim 17 when dependent on claim 16, in which the delay element is a length of optical fibre coupled between the dispersion compensation element and the optical reflector.

19. A dispersion compensation device according to any of claims 9 to 18 comprising a housing having at least one spool of dispersion compensation fibre arranged axially within the housing so as to provide a passage extending along a length of the housing through the core of the spool.

20. A device according to claim 19, in which the housing is a submarine housing.

21. A device according to claim 20, in which the submarine housing is a casing for an optical repeater.

## Patentansprüche

1. Verfähren einer Dispersionskompensation mit folgenden Schritten:
Empfangen eines optischen Signals mit einer Reihe von Kanälen, welche durch Wellenlängen separatisiert werden; und
Anwenden der Dispersionskompensation auf mindestens einem optischen Übertragungsweg; **dadurch gekennzeichnet, dass** dieser Übertragungsweg ein Wellenlängen-Frequenzband trägt, welches eine Vielzahl von Kanälen umspannt, und welches weniger als die Gesamtzahl der Kanäle in dem optischen Signal ergibt, mit dem die Dispersionskompensation auf das Wellenlängen-Frequenzband appliziert wird, und das von den Wellenlängen außerhalb des Wellenlängen-Frequenzbandes unabhängig ist.

2. Verfahren nach Anspruch 1, welches zusätzlich die folgenden Schritte aufweist:
Splitten einer Vielzahl von Kanälen in zwei oder mehreren Wellenlängen-Frequenzbändern;
Übertragungs-Ausbreitung von zwei oder der mehreren Wellenlängen-Frequenzbändern entlang getrennter, optischer Übertragungswege, wobei die Dispersionskompensation in mindestens einem der optischen Übertragungswege appliziert wird, und anschließendes
Neukombinieren der Signale an einem optischen Ausgang.

3. Verfahren nach Anspruch 2, wobei das auf mindestens einem der optischen Übertragungswege übertragene Signal verstärkt wird, um Übertragungsverluste kompensieren zu können.

4. Verfahren nach einem der vorstehenden Ansprüche, wobei die Dispersionskompensation mittels einer Vielzahl von Längen der optischen Dispersionskompensations-Glasfaser bereitgestellt wird.

5. Verfahren nach Anspruch 1, welches die folgenden Schritte umfasst:
Passieren des gesamten optischen Signals durch ein bandselektives Dispersionskompensationsmittel, das einzig zur Applikation der Dispersionskompensation auf Kanäle innerhalb eines voreingestellten Wellenlängen-Frequenzbandes adaptiert ist.

6. Verfahren nach Anspruch 5, wobei die Kanäle außerhalb des voreingestellten Wellenlängen-Frequenzbandes durch ein optisches Element reflektiert werden, welches anders als das bandselektive Dispersionskompensationsmittel ist.

7. Verfahren nach Anspruch 5 oder 6, wobei das Dispersionskompensationsmittel ein Photorefraktionselement oder ein Beugungsgitter ist.

8. Verfahren nach einem der vorstehenden Ansprüche, welches zusätzlich die folgenden Schritte aufweist:
Formatbildung einer gleichförmigen Zeitverzögerung auf ein spezielles Wellenlängen-Frequenzband, um die relative Dispersion zwischen dem speziellen Wellenlängen-Frequenzband und einem zweiten unterschiedlichen Wellen-Frequenzband zu kompensieren.

9. Dispersionskompensations-Vorrichtung für die Anwendung der Dispersionskompensation auf ein optisches Signal mit einer Reihe von Kanälen, welche ein Dispersionskompensationsmittel (6, 7, 23) aufweist, das so konfiguriert ist, um die Dispersionskompensation auf mindestens einem optischen Übertragungsweg anzuwenden; **dadurch gekennzeichnet dass**, der Übertragungsweg ein voreingestelltes Wellenlängen-Frequenzband überträgt, welches eine Vielzahl von Kanälen umspannt, und welches weniger als die Gesamtzahl der Kanäle aus dem optischen Signal ergibt, mit dem die Dispersionskompensation auf das voreingestellte Wellenlängen-Frequenzband appliziert wird, das von den Wellenlängen außerhalb des voreingestellten Wellenlängen-Frequenzbandes unabhängig ist.

10. Vorrichtung nach Anspruch 9, welche zusätzlich einen Frequenzband-Splitter umfasst, der so angeordnet ist, um zwei oder mehrere optische Übertragungswege zu beschicken, wobei mindestens einer der optischen Übertragungswege ein Dispersionskompensationsmittel aufweist.

11. Vorrichtung nach Anspruch 9 oder 10, in welcher das Dispersionskompensationsmittel die Länge der optischen Dispersionskompensations-Glasfaser aufweist.

12. Vorrichtung nach einem der Ansprüche 9 bis 11, welche zusätzlich einen optoelektronischen Koppler aufweist, der so angeordnet ist, um ein optisches Signal, das an einem optischen Eingang empfangen worden ist, auf einen optischen Übertragungsweg mit einem Dispersionskompensationsmittel einzuspeisen, wobei das Dispersionskompensationsmittel so adaptiert ist, damit die Dispersionskompensation auf einer Reihe von Kanälen innerhalb einer limitierten Frequenz-Bandbreite angewendet werden kann, und um die Signale innerhalb dieser Bandbreite an einen optischen Ausgang des optoelektronischen Kopplers zu reflektieren.

13. Vorrichtung nach Anspruch 12, in welcher der optoelektronische Koppler ein optischer Zirkulator ist.

14. Vorrichtung nach einem der Ansprüche 9 bis 13, in welcher das Dispersionskompensationsmittel ein Beugungsgitter ist.

15. Vorrichtung nach einem der Ansprüche 9 bis 13, in welcher das Dispersionskompensationsmittel ein Photorefraktionselement ist.

16. Vorrichtung nach einem der Ansprüche 12 bis 15, in welcher die Dispersionskompensations-Vorrichtung zusätzlich einen optischen Reflektor aufweist, der an das Dispersionskompensationsmittel gekoppelt ist, um optische Signale von außerhalb der voreingestellten Frequenz-Bandbreite an den optischen Ausgang des optoelektronischen Kopplers zu reflektieren.

17. Vorrichtung nach einem der Ansprüche 9 bis 16, welche zusätzlich ein Zeitverzögerungselement aufweist, um eine Innerband-Dispersionskompensation zur Verfügung stellen zu können.

18. Vorrichtung nach Anspruch 16 oder Anspruch 17, wenn dieser von Anspruch 16 abhängig ist, in welcher das Zeitverzögerungselement eine Länge der optischen Glasfaser ist, das zwischen dem Dispersionskompensationsmittel und dem optischen Reflektor gekoppelt ist.

19. Dispersionskompensations-Vorrichtung nach einem der Ansprüche 9 bis 18, welche ein Gehäuse mit mindestens einem Spulenkörper der Dispersionskompensations-Glasfaser umfasst, der innerhalb des Gehäuses so axial ausgerichtet ist, um einen Durchlauf bereit zu stellen, welcher sich entlang einer Länge des Gehäuseteils durch den Kern des Spulenkörpers erstreckt.

20. Vorrichtung nach Anspruch 19, in welcher das Gehäuse ein Unterwassergehäuse ist.

21. Vorrichtung nach Anspruch 20, in welcher das Unterwassergehäuse die Ummantelung für einen Optikregenerator ist.

## Revendications

1. Procédé de compensation de dispersion comprenant les étapes de :
réception d'un signal optique ayant un nombre de canaux séparés par une longueur d'ondes ; et, application de la compensation de dispersion à au moins un trajet optique, **caractérisé en ce que** ledit trajet comporte une bande de longueur d'ondes qui réalise une liaison sur une pluralité de canaux en nombre inférieur au nombre total de canaux dans un signal optique, appliquant ainsi une compensation de dispersion à ladite bande de longueur d'ondes indépendamment des longueurs d'ondes en dehors de ladite bande de longueurs d'ondes.

2. Procédé selon la revendication 1, comprenant en outre les étapes de :
séparation de la pluralité de canaux en deux ou plusieurs bandes de longueurs d'ondes ;
propagation de deux ou plusieurs bandes de longueurs d'ondes le long des trajets optiques séparés, où la compensation de dispersion est appliquée dans au moins un des trajets optiques ; et, par la suite recombinaison des signaux sur une sortie optique.

3. Procédé selon la revendication 2, dans lequel le signal porté par au moins un des trajets optiques est amplifié pour compenser les pertes.

4. Procédé selon l'une quelconque des revendications précédentes, dans lequel la compensation de dispersion est fournie au moyen d'un nombre de longueurs de fibre optique à compensation de dispersion.

5. Procédé selon la revendication 1, comprenant l'étape de :
passage du signal optique entier à travers un élément de compensation de dispersion sélective de bande adapté pour appliquer une compensation de dispersion seulement aux canaux dans une bande de longueur d'ondes prédéterminée.

6. Procédé selon la revendication 5, dans lequel les canaux en dehors de la bande de longueur d'ondes sont réfléchis par un élément optique qui est différent dudit élément de compensation de dispersion sélective de bande.

7. Procédé selon la revendication 5 ou 6, dans lequel l'élément de compensation de dispersion est un élément photo-réfracteur ou un réseau de diffraction.

8. Procédé selon l'une quelconque des revendications précédentes, comprenant en outre l'étape de :
application d'un retard uniforme à une bande de longueur d'ondes particulière pour compenser une dispersion relative entre la bande de longueur d'ondes particulière et une seconde bande de longueur d'ondes différente.

9. Dispositif de compensation de dispersion pour appliquer une compensation de dispersion à un signal optique ayant un nombre de canaux, comprenant un élément de compensation de dispersion (6 ; 7 ; 23) qui est configuré pour appliquer une compensation de dispersion à au moins un trajet optique, **caractérisé en ce que** ledit trajet comporte une bande de longueur d'ondes prédéterminée réalisant une liaison sur une pluralité de canaux en nombre inférieur au nombre total de canaux du signal optique appliquant ainsi une compensation de dispersion à une bande de longueur d'ondes prédéterminée indépendamment des longueurs d'ondes en dehors de la bande de longueur d'ondes prédéterminée.

10. Dispositif selon la revendication 9, comprenant en outre un séparateur de bandes disposé pour alimenter deux trajets optiques ou plus, dans lequel au moins un des trajets optiques comprend un élément de compensation de dispersion.

11. Dispositif selon la revendication 9 ou 10, dans lequel l'élément de compensation de dispersion comprend une longueur de fibre optique à compensation de dispersion.

12. Dispositif selon l'une quelconque des revendications 9 à 11, comprenant en outre un coupleur optique disposé pour alimenter un signal optique reçu sur une entrée optique sur un trajet optique ayant un élément de compensation de dispersion, l'élément de compensation de dispersion étant adapté pour appliquer une compensation de dispersion à un nombre de canaux dans une bande passante limitée et réfléchir les signaux dans cette bande passante vers la sortie optique du coupleur optique.

13. Dispositif selon la revendication 12, dans lequel le coupleur optique est un circulateur optique.

14. Dispositif selon l'une quelconque des revendications 9 à 13, dans lequel l'élément de compensation de dispersion est un réseau de diffraction.

15. Dispositif selon l'une quelconque des revendications 9 à 13, dans lequel l'élément de compensation de dispersion est un élément photo réfracteur.

16. Dispositif selon l'une quelconque des revendications 12 à 15, dans lequel le dispositif de compensation de dispersion comprend en outre un réflecteur optique couplé à un élément de compensation de dispersion pour réfléchir les signaux optiques en dehors de la bande passante prédéterminée jusqu'à la sortie optique du coupleur optique.

17. Dispositif selon l'une quelconque des revendications 9 à 16, comprenant en outre un élément à retard pour fournir une compensation de dispersion inter-bande.

18. Dispositif selon la revendication 16 ou la revendication 17 lorsqu'il dépend de la revendication 16, dans lequel l'élément à retard est une longueur de fibre optique couplée entre l'élément de compensation de dispersion et le réflecteur optique.

19. Dispositif de compensation de dispersion selon l'une quelconque des revendications 9 à 18 comprenant un boîtier ayant au moins une bobine d'une fibre de compensation de dispersion disposée axialement dans le boîtier afin de fournir un passage s'étendant le long d'une longueur du boîtier à travers le noyau de la bobine.

20. Dispositif selon la revendication 19, dans lequel le boîtier est un boîtier sous-marin.

21. Dispositif selon la revendication 20, dans lequel le boîtier sous-marin est un boîtier pour un répéteur optique.
